(19) Europäisches Patentamt / European Patent Office / Office européen des brevets

(11) **EP 3 213 129 B1**

(12) **EUROPEAN PATENT SPECIFICATION**

(45) Date of publication and mention of the grant of the patent:
**05.08.2020 Bulletin 2020/32**

(21) Application number: **15854152.4**

(22) Date of filing: **02.11.2015**

(51) Int Cl.:
***G02B 5/08*** (2006.01)

(86) International application number:
**PCT/US2015/058582**

(87) International publication number:
**WO 2016/070171 (06.05.2016 Gazette 2016/18)**

(54) **ANTI-FOG MIRROR APPARATUS**

SPIEGELVORRICHTUNG MIT BESCHLAGSCHUTZ

APPAREIL DE MIROIR ANTI-BUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2014 US 201414530420**

(43) Date of publication of application:
**06.09.2017 Bulletin 2017/36**

(73) Proprietor: **MCS Industries, Inc.
Easton, Pennsylvania 18045 (US)**

(72) Inventor: **KOHLER, Dallas Aaron
Schnecksville, Pennsylvania 18078 (US)**

(74) Representative: **Archer, Graham John
Archer-IP Ltd
Northern Design Centre
Abbott's Hill
Gateshead
Newcastle upon Tyne NE8 3DF (GB)**

(56) References cited:
**US-A- 5 402 265      US-A1- 2008 187 728
US-B1- 6 455 142**

**Description**

CROSS-REFERENCE TO RELATED APPLICATIONS

This application is a PCT International Application of United States Patent Application No. 14/530,420 filed on October 31, 2014.

FIELD OF THE DISCLOSURE

The present disclosure relates to aesthetically pleasing reflective surface coverings having anti-fog properties.

BACKGROUND

Compositions and coatings which provide anti-fog and scratch-resistant surfaces are known. However, when these compositions and coatings are applied to a surface, they can adversely impact the aesthetics and/or functionality of the surface to which they are applied. For example, the application of certain anti-fog compositions and coatings result in surfaces with imperfections and/or discoloration. Surface imperfections and discoloration may not be an issue for some surfaces, e.g. containers or refrigerator doors; however, surface coverings that require a certain level of reflectivity have little tolerance for surface imperfections or discoloration. Thus, there remains a need for reflective surface coverings which avoid discoloration and surface imperfections. Embodiments of the present invention are designed to meet these needs. Other examples of the prior art are disclosed in the following patent document publications US2008187728, US6455142 and US5402265.

SUMMARY

According to the present invention there is provided a mirror apparatus according to claim 1 and a method of preparing a mirror apparatus according to claim 4. In some embodiments, the present invention provides a mirror apparatus comprising: a reflective substrate; and an anti-fog complex coupled to the reflective substrate, the anti-fog complex comprising: a thermally activated adhesive layer atop the reflective substrate; a first polymeric layer atop the thermally activated adhesive layer; and a second polymeric layer atop the first polymeric layer; wherein the thickness ratio between the thermally activated adhesive layer and the first thermoplastic polymeric layer is from about 1.25:1 to about 2.75:1.

Other embodiments of the present invention provide a mirror apparatus comprising: a reflective substrate; and an anti-fog complex comprising: a pressure sensitive adhesive layer atop the substrate; a first polymeric layer comprising a thermoplastic polymer, the first polymeric layer atop the pressure sensitive adhesive layer; and a second polymeric layer atop the first polymeric layer; wherein the thickness ratio between the pressure sensitive adhesive layer and the first polymeric layer ranges from about 0.25:1 to about 1.25:1.

Further embodiments provide a method of preparing a mirror apparatus comprising: a) providing a reflective substrate; b) providing a multi-layer film comprising: a protective layer; and an anti-fog complex comprising: a first polymeric layer; an adhesive layer; and a second thermoplastic polymeric layer; c) laminating the multi-layer film and the reflective substrate together to form a laminated composite; d) maintaining the laminated composite in an ambient environment for a time sufficient to permit solidification of the multi-layer film; e) removing the protective layer from the laminated composite to expose the anti-fog complex; and f) performing a post-lamination cleaning phase..

BRIEF DESCRIPTION OF THE DRAWINGS

The present invention will become more fully understood from the detailed description and the accompanying drawings, wherein:

Figure 1 is a front perspective view of a mirror apparatus 1 comprising a mirror according to the present invention;
Figure 1A is a cross-sectional view of a portion of the mirror according to the present invention, the portion being identified by the dotted lines in Figure 1 and the cross-sectional view is taken alone the II line set forth in Figure 1 - Figure 1A is not drawn to scale;
Figure 2 is a cross-sectional view of a portion of the mirror according to embodiments of the present invention, the portion being identified by the dotted lines in Figure 1 and the cross-sectional view is taken alone the II line set forth in Figure 1 - Figure 2 is not drawn to scale;
Figure 3 is a side view of an multi-layered film according to the present invention - Figure 3 is not drawn to scale; and
Figure 4 is a cross-sectional view of a portion of the mirror according to other embodiments of the present invention, the portion being identified by the dotted lines in Figure 1 and the cross-sectional view is taken alone the II line set forth in Figure 1 - Figure 4 is not drawn to scale.

DETAILED DESCRIPTION

As used herein, the term "complex" refers to a plurality of components that are connected. According to the present invention, the terms "substantially" and "about" refers to +/- 5% of the referenced value. According to the present invention, the term "substantially free" refers to less than 0.05 wt. % based on total weight of the referenced composition.

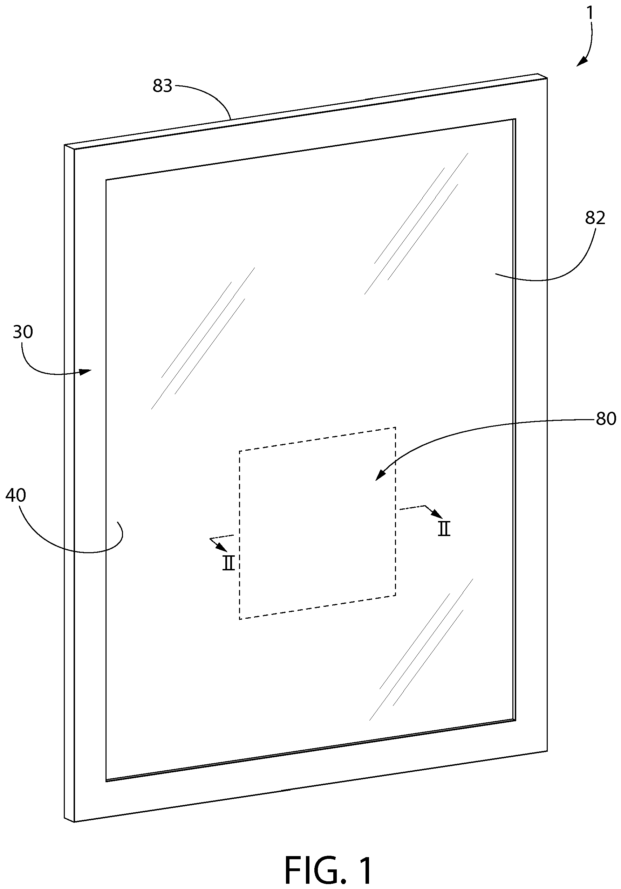

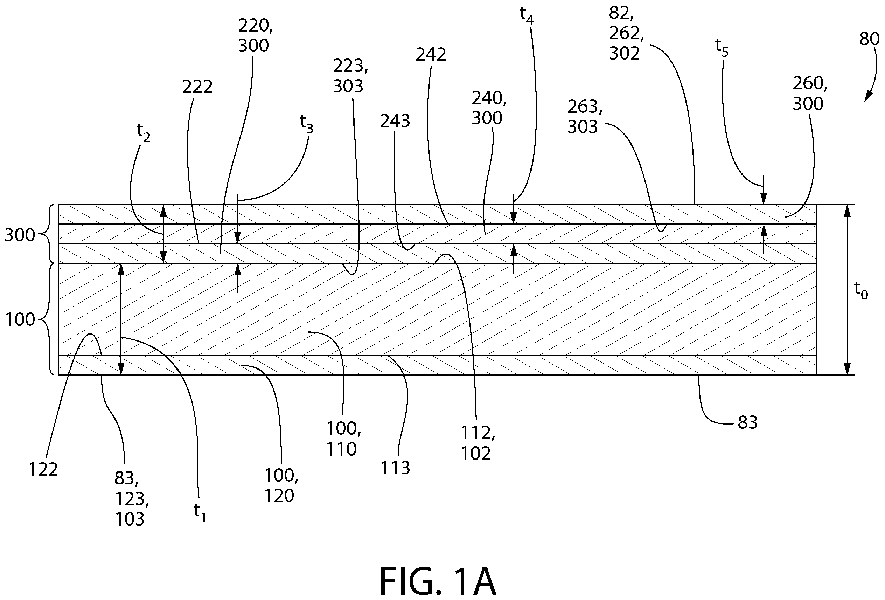

Referring to Figures 1 and 1A concurrently, a mirror apparatus 1 according to the present invention is disclosed. The mirror apparatus 1 generally comprises an annular frame 30 defining a central opening 40 and a mirror 80. The mirror 80 is supported within the annular frame 30 and is a laminate structure that generally comprises a first major surface 82 opposite a second major surface 83, the laminate structure comprising a reflective substrate 100 and an anti-fog complex 300.

The reflective substrate 100 may comprise an upper surface 102 opposite a lower surface 103. The reflective substrate 100 may have a thickness $t_1$ as measured from the upper surface 102 to the lower surface 103 of the reflective substrate 100. The reflective substrate 100 may have a thickness $t_1$ ranging from about 2 mm to about 6 mm - including all values and sub-ranges there-between. The reflective substrate 100 may have a thickness $t_1$ ranging from about 2.5 mm to about 3.5 mm - including all values and sub-ranges there-between. The reflective substrate 100 may have a thickness $t_1$ ranging from about 2.75 mm to about 3.25 mm - including all values and sub-ranges there-between. In some embodiments, the reflective substrate 100 may have a thickness $t_1$ of about 3 mm.

The reflective substrate 100 may further comprise a transparent base layer 110 having an upper surface 112 opposite a lower surface 113 and a back coating 120 having an upper surface 122 opposite a lower surface 123. The upper surface 102 of the reflective substrate 100 may comprise the upper surface 112 of the transparent base layer 110 and the lower surface 103 of the reflective substrate 100 may comprise the lower surface 123 of the back coating 120. The upper surface 122 of the reflective back coating 120 may directly contact the lower surface 113 of the transparent base layer 110.

The back coating 120 may comprise a reflective material. The transparent base layer 110 may be substantially clear and made of glass or a plastic material. For the purposes of this application, the phrases "substantially clear" or "optically clear" refers to materials having an optical transmission of at least about 90%, or even higher, and a haze value of below about 5%, or even lower. The transparent base layer 110 should be substantially clear such that the underlying back coating 120 forms a reflective surface on the lower surface 113 of the transparent base layer 110 when viewed in a direction extending from at least the upper surface 112 towards the lower surface 113 of the reflective substrate 100. The transparent base layer 110 should be substantially clear such that the underlying back coating 120 forms a reflective surface when viewed from the first major surface 82 of the mirror 80. Stated otherwise, a viewer should see their reflection in the reflective surface when viewing the mirror 80 in the direction of the upper surface 102 towards the lower surface 103 of the reflective substrate 100.

The anti-fog complex 300 of the present invention is optically clear and comprises an upper surface 302 opposite a lower surface 303. The anti-fog complex 300 may have a thickness $t_2$ as measured from the upper surface 302 to the lower surface 303 of the anti-fog complex 300. The anti-fog complex 300 may comprise an adhesive layer 220, a first polymeric layer 240, and a second polymeric layer 260. The second polymeric layer 260 may be atop the first polymeric layer 240. The first polymeric layer 240 may be atop the adhesive layer 220. The adhesive layer 200 may be atop the reflective substrate 100.

The adhesive layer 220 may comprise an upper surface 222 opposite a lower surface 223. The adhesive layer 220 may have a thickness $t_3$ as measured from the upper surface 222 to the lower surface 223 of the adhesive layer 223. The lower surface 303 of the anti-fog complex 300 may comprise the lower surface 223 of the adhesive layer 220. The adhesive layer 220 is optically clear.

The first polymeric layer 240 may comprise an upper surface 242 opposite a lower surface 243. The first polymeric layer 240 may have a thickness $t_4$ as measured from the upper surface 242 to the lower surface 243 of the polymeric layer 240. The first polymeric layer 240 is optically clear.

The first polymeric layer 240 may comprises a polymer selected from: polymethyl methacrylate; a polyamide; polybenzamidazole; polyethylene; polypropylene; polystyrene; polyvinyl chloride; polyethylene terephthalate; and polytetrafluoroethylene. In some embodiments, the polymer of the first polymeric layer 240 is a thermoplastic polymer. The first polymeric layer 240 may be formed from a thermoplastic polymer of polyethylene terephthalate. The first polymeric layer 240 may be substantially free of UV additives. In some embodiments, the first polymeric layer 240 may be completely free of UV additives.

The second polymeric layer 260 may comprise an upper surface 262 opposite a lower surface 263. The second polymeric layer 260 may have a thickness $t_5$ as measured from the upper surface 262 to the lower surface 263 of the second polymeric layer 260. The thickness $t_5$ of the second polymeric layer 260 may range from about 5 μm to about

μm - including all values and sub-ranges there-between. The thickness $t_5$ of the second polymeric layer 260 may be about 10 μm. The upper surface 302 of the anti-fog complex 300 may comprise the upper surface 222 of the second polymeric layer 260.

The second polymeric layer 260 comprises polyurethane. The polyurethane of the second polymeric layer may be hydrophilic. The polyurethane based layer may be formed from a resin composition comprising an isocyanate prepolymer having free isocyanate groups, and an organic solvent solution of a hydrophilic polyol and a surfactant having isocyanate-reactive functionality. In some embodiments, the hydrophilic polyol and the surfactant react with the free isocyanate groups in the isocyanate prepolymer to form the polyurethane backbone having both the hydrophilic moiety and the surfactant moiety chemically reacted therein and attached thereto. Suitable polyurethane based layers are described, for example, in U.S. Patent No. 5,877,254.

In some embodiments, the surfactant has distinct hydrophilic and hydrophobic regions such that the desired interfacial tension between the surface and the condensing moisture is effectively reduced.

Cationic and anionic surfactants are preferred; however, non-ionic surfactants may also be useful, provided they are equipped with the reactive group functionality and exhibit the distinct hydrophilic and hydrophobic regions. In certain applications where non-ionic surfactants are used, they may be selected from ethoxylated or propoxylated alcohols, phenols, amides and amines. Non-ionic surfactants, however, are known to typically include isocyanate reactive groups such as hydroxyl groups.

Anionic and cationic surfactants rarely contain free, reactive groups. In some embodiments, wherein anionic and cationic surfactants are properly modified to include free reactive hydroxyl groups, or other groups which are reactive with isocyanate groups, such modifications will provide the necessary reaction site to incorporate into the polyurethane structure.

Ionic surfactants are preferred because they are often more effective wetting agents than non-ionic surfactants due to their ionic character. In the present invention, the surfactant anionics are free to migrate throughout the polymer complex since they are bound to the reacted cations by electrostatic interaction rather than covalent bonding.

The isocyanate-reactive surfactant may be selected from an anionic surfactant, a cationic surfactant, and a mixture thereof. Although hydroxyl-bearing surfactants are preferred, a number of other reactive groups on the surfactant are contemplated, including amino, carboxyl and thiol groups. The surfactant may bear more than one or one-type of isocyanate-reactive group. The ionic surfactants are preferably quaternary cationic surfactants or anionic surfactants having hydroxyl groups in the cation portion. More preferably, the surfactant is a non-ethoxylated hydrocarbon chain with greater than 16 carbon atoms. A non-limiting list of examples of suitable anionic surfactants includes monoethanolamine salts of sulfonic acids, diethanolamine salts of sulfonic acids, triethanolamine salts of sulfonic acids and mixtures thereof.

Typically, anionic surfactants rarely contain free, reactive hydroxyl groups in their structure. As such, these substances must be prepared to incorporate free hydroxyl or other isocyanate-reactive groups. Hydroxylation is accomplished by neutralizing a hydroxyl bearing quartenary ammonium base such a choline hydroxide with an acid such as dodecylbenzene sulfonic acid, as farther described herein in the examples. Other hydroxyl-bearing ammonium compounds include but are not limited to triethylethanol-, diethyldiethano-, and ethyltriethanolammonium salts. A non-limiting list of suitable sulfonic acids from which the salts are prepared includes dodecylbenzene sulfonic acid, napthalene sulfonic acid, lignin sulfonic acids, petroleum sulfonic acids and paraffin sulfonic acids.

Examples of hydroxyl-containing cationic-surfactants include, without limitation, ricinoleamidopropyl dimethylethylammonium ethosulfate, stearamidopropyl dimethylethanolammonium methasulfate and octadecylmethol diethanolammonium chloride.

The polyol that may be suitable for use in the present invention are of a hydrophilic character, and are capable of reacting with an isocyanate prepolymer to form a polyurethane chain. Non-limiting examples of suitable polyol for use in the present invention includes polyethylene glycol and ethylene glycol/propylene glycol copolymers and mixtures thereof. Other suitable hydrophilic polyol include polybutylene glycol, polyetheylene imine, amine-terminated polyethers and certain polyester polyol.

The isocyanate prepolymers contemplated for use with the present invention include those isocyanates containing reactive isocyanate groups and which are capable of forming polyurethane polymer chains as is well known to those skilled in the art. In preferred embodiments, the isocyanate prepolymer is a biuret or an isocyanurate of a diisocyanate. Most preferably, the diisocyanate is hexamethylene diisocyanate. Other useful diisocyanates include prepolymers of diisophorone diisocyanate, diphenylmethane diisocyanate, bis(methylcyclohexyl) diisocyanate and toluenediisocyanate. Blocking of the isocyanate group, for example with an oxime or phenol, and later removal of the protective group prior to reaction is also contemplated. When blocked isocyanates are employed, it is possible to use solvents or other compounds which, but for the protective group in the isocyanate, would react with and consume the isocyanate groups.

The second polymeric layer 260 may be substantially free of UV additives. In other embodiments, the second polymeric layer 260 is completely free of UV additives.

The anti-fog complex 300 of the present invention may have a thickness $t_2$ that is calculated as follows:

$$t_2 = t_3 + t_4 + t_5$$

The anti-fog complex 300 may be formed by the upper surface 222 of the adhesive layer 220 contacting the lower surface 243 of the first polymeric layer 240 and the upper surface 242 of the first polymeric layer 240 contacting the lower surface 263 of the second polymeric layer 260.

The mirror 80 may be formed by the lower surface 263 of the second polymeric layer 260 contacting the upper surface 242 of the first polymeric layer 240, the lower surface 243 of the second polymeric layer 240 contacting the upper surface 222 of the adhesive layer 220, the lower surface 223 of the adhesive layer 220 contacting the upper surface 112 of the transparent base layer 110, and the lower surface 113 of the transparent base layer 110 contacts the upper surface 122 of the back coating 120.

The mirror 80 of the present invention may have a thickness $t_0$ that is calculated as follows:

$$t_0 = t_1 + t_3 + t_4 + t_5$$

The mirror 80 of the present invention may comprise the lower surface 303 of the anti-fog complex 300 contacting the upper surface 102 of the reflective substrate 100 - wherein the lower surface 303 of the anti-fog complex 300 comprises the lower surface 223 of the adhesive layer 200 - such that the lower surface 303 of the anti-fog complex 300 is adhesively bonded (by the adhesive layer 220) to the upper surface 102 of the reflective substrate 100.

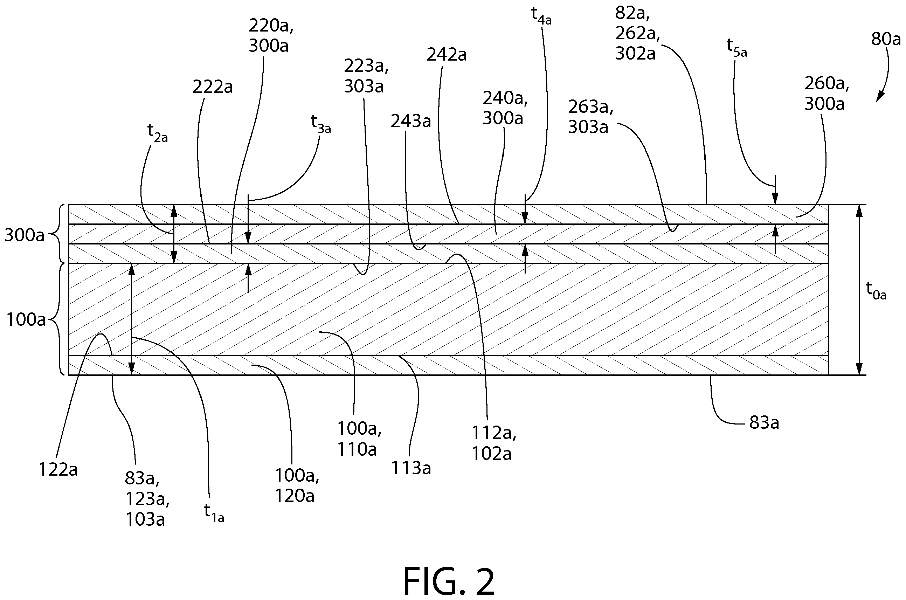

Referring now specifically to the embodiments exemplified in Figure 2, a mirror apparatus 1 comprising a mirror 80a will be described. The mirror 80a is similar to the mirror 80 except for the differences described herein below. The features of the mirror 80a that are described above with regard to the mirror 80 will not be repeated herein in the interest of brevity, it being understood that the description above with regard to the mirror 80 applies. Furthermore, features of the mirror 80a will be similarly numbered as similar features on the mirror 80 except that the a suffix of "a" will be used. For features of the mirror 80a that are numbered but not described, it should be understood that the description of the similar feature in the mirror 80 applies.

The present invention is directed to a mirror apparatus comprising a mirror 80a having an anti-fog complex 300a comprising an adhesive layer 220a, a first polymeric layer 240a, and a second polymeric layer 260a, wherein the adhesive layer 220a is formed from a thermally activated adhesive composition.

The anti-fog complex 300a may have a thickness $t_{2a}$ ranging from about 250 $\mu$m to about 300 $\mu$m. In some embodiments, the anti-fog complex 300a has a thickness $t_{2a}$ ranging from about 255 $\mu$m to about 295 $\mu$m. In some embodiments, the anti-fog complex 300a has a thickness $t_{2a}$ ranging from about 260 $\mu$m to about 290 $\mu$m. In some embodiments, the anti-fog complex 300a has a thickness $t_{2a}$ ranging from about 265 $\mu$m to about 285 $\mu$m. In some embodiments, the anti-fog complex 300a has a thickness $t_{2a}$ ranging from about 270 $\mu$m to about 280 $\mu$m. In some embodiments, the anti-fog complex 300a has a thickness $t_{2a}$ of about 275 $\mu$m.

A ratio of adhesive layer 220a thickness $t_{3a}$ to the first polymeric layer 240a thickness $t_{4a}$ may range from about 1.25:1 to about 2.75:1 - including all ratios and sub-ranges there-between. The ratio of adhesive layer 220a thickness $t_{3a}$ to the first polymeric layer 240a thickness $t_{4a}$ may range from about 1.25:1 to about 2.5:1 - including all ratios and sub-ranges there-between. The ratio of adhesive layer 220a thickness $t_{3a}$ to the first polymeric layer 240a thickness $t_{4a}$ may range about 1.25:1 to about 2.25:1 - including all ratios and sub-ranges there-between. The ratio of adhesive layer 220a thickness $t_{3a}$ to the first polymeric layer 240a thickness $t_{4a}$ may range from about 1.25:1 to about 2:1 - including all ratios and sub-ranges there-between. The ratio of adhesive layer 220a thickness $t_{3a}$ to the first polymeric layer 240a thickness $t_{4a}$ may be about 1.5:1.

The adhesive layer 220a may be formed from a thermally activated adhesive composition and comprises an adhesive available from Akron Coating and Adhesives, Inc., e.g. ACA-40-004. Other suitable thermally activated adhesives are described in U.S. Patent No. 6,753,379 to 3M Innovative Properties Company. In some embodiments, the thermally activated adhesive is in the form of a film. In some embodiments, the thermally activated adhesive is water-based. In some embodiments, the thermally activated adhesive is solvent-based. According to such embodiments, the adhesive layer 220a may be substantially free of UV additives. In other embodiments, the thermally activated adhesive layer may be completely free of UV additives.

The adhesive layer 220a formed from the thermally activated adhesive composition may have a thickness $t_{3a}$ ranging from about 140 $\mu$m to about 175 $\mu$m - including all values and sub-ranges there-between.

The first polymeric layer 240a may have a thickness $t_{3a}$ ranging from about 75 $\mu$m to about 125 $\mu$m - including all values and sub-ranges there-between. In some embodiments, the first polymeric layer 240a has a thickness $t_{3a}$ of from about 80 $\mu$m to about 120 $\mu$m - including all values and sub-ranges there-between. In some embodiments, the first polymeric layer 240a has a thickness $t_{3a}$ of from about 85 $\mu$m to about 115 $\mu$m - including all values and sub-ranges there-between. In some embodiments, the first polymeric layer 240a has a thickness $t_{3a}$ of from about 90 $\mu$m to about 110 $\mu$m - including all values and sub-ranges there-between. In some embodiments, the first polymeric layer 240a has a thickness $t_{3a}$ of from about 95 $\mu$m to about 105 $\mu$m - including all values and sub-ranges there-between. In some embodiments, the first polymeric layer 240a has a thickness $t_{3a}$ of about 100 $\mu$m. In some embodiments, the first polymeric layer 240a has a thickness $t_{3a}$ of about 101 $\mu$m. In some embodiments, the first polymeric layer 240a has a thickness $t_{3a}$ of about 102 $\mu$m. In some embodiments, the first polymeric layer 240a has a thickness $t_{3a}$ of 101.6 $\mu$m.

The adhesive layer 220a formed from the thermally activated adhesive composition may comprise from about 52 wt.% to about 65 wt.% of the anti-fog complex 300a - including all values and sub-ranges there-between. The adhesive layer 220a formed from the thermally activated adhesive composition may comprise from about 55 wt.% to about 59 wt.% of the anti-fog complex 300a - including all values and sub-ranges there-between. The adhesive layer 220a formed from the thermally activated adhesive composition may comprise about 57 wt.% of the anti-fog complex 300a. The adhesive layer 220a According to the embodiments of may comprises 58 wt.% of the anti-fog complex 300a.

The first polymeric layer 240a may comprise from about 28 wt.% to about 48 wt.% of the anti-fog complex 300a - including all values and sub-ranges there-between. The first polymeric layer 240a may comprise from about 33 wt.% to about 43 wt.% of the anti-fog complex 300a - including all values and sub-ranges there-between. The first polymeric layer 240a may comprise about 38 wt.% of the anti-fog complex 300a.

The second polymeric layer 260a may comprise from about 1 wt.% to about 10 wt.% of the anti-fog complex 300a - including all values and sub-ranges there-between. The second polymeric 260a layer may comprise from about 2 wt.% to about 7 wt.% of the anti-fog complex 300a - including all values and sub-ranges there-between. The second polymeric layer 260a may comprise from about 3.5 wt.% to about 5.5 wt.% of the anti-fog complex 300a - including all values and sub-ranges there-between. The second polymeric layer 260a may comprise about 4.5 wt.% of the anti-fog complex 300a.

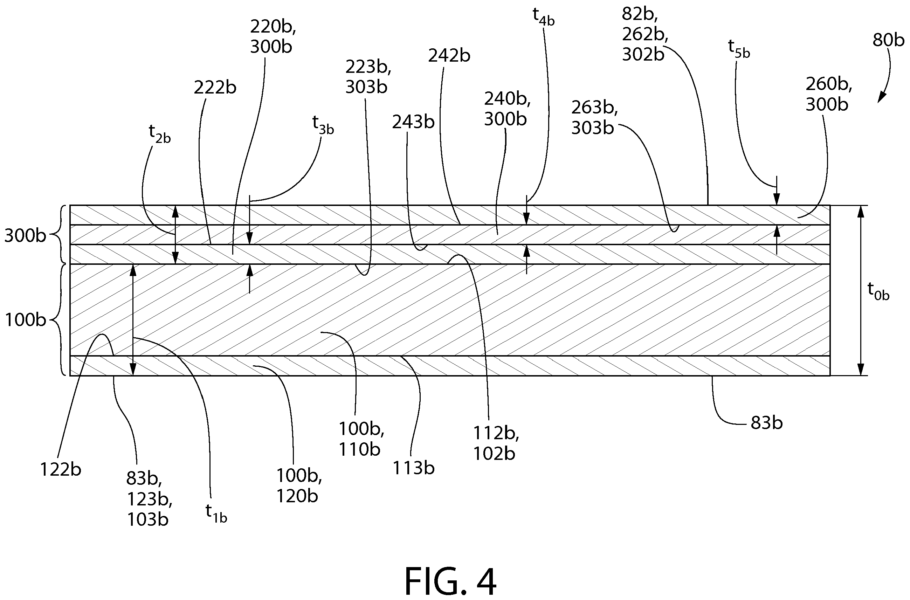

Referring now specifically to the embodiments exemplified in Figure 4, a mirror apparatus 1 comprising a mirror 80b will be described. The mirror 80b is similar to the mirror 80 except for the differences described herein below. The features of the mirror 80b that are described above with regard to the mirror 80 will not be repeated herein in the interest of brevity, it being understood that the description above with regard to the mirror 80 applies. Furthermore, features of the mirror 80b will be similarly numbered as similar features on the mirror 80 except that the a suffix of "b" will be used. For features of the mirror 80b that are numbered but not described, it should be understood that the description of the similar feature in the mirror 80 applies.

The present invention is directed to a mirror apparatus comprising a mirror 80b having an anti-fog complex 300b comprising an adhesive layer 220b, a first polymeric layer 240b, and a second polymeric layer 260b, wherein the adhesive layer 220b is formed a pressure sensitive adhesive composition.

The anti-fog complex 300b may have a thickness $t_{2b}$ ranging from about 50 $\mu$m to about 125 $\mu$m - including all values and sub-ranges there-between. In some embodiments, anti-fog complex 300b has a thickness $t_{2b}$ ranging from about 65 $\mu$m to about 110 $\mu$m - including all values and sub-ranges there-between. In some embodiments, anti-fog complex 300b has a thickness $t_{2a}$ ranging from about 75 $\mu$m to about 95 $\mu$m - including all values and sub-ranges there-between. In some embodiments, the anti-fog complex 300b has a thickness $t_{2b}$ ranging from about 80 $\mu$m to about 90 $\mu$m - including all values and sub-ranges there-between. In some embodiments, the anti-fog complex 300b has a thickness $t_{2b}$ of about 86 $\mu$m.

A ratio of adhesive layer 220b thickness $t_{3b}$ to the first polymeric layer 240b thickness $t_{4b}$ may range from about 0.2:1 to about 1.25:1 - including all ratios and sub-ranges there-between. The ratio of adhesive layer 220b thickness $t_{3b}$ to the first polymeric layer 240b thickness $t_{4b}$ may range from about 0.25:1 to about 1:1 - including all ratios and sub-ranges there-between. The ratio of adhesive layer 220b thickness $t_{3b}$ to the first polymeric layer 240b thickness $t_{4b}$ my range from about 0.5:1 to about 1:1 - including all ratios and sub-ranges there-between. The ratio of adhesive layer 220b thickness $t_{3b}$ to the first polymeric layer 240b thickness $t_{4b}$ may range from about 0.65:1 to about 1:1 - including all ratios and sub-ranges there-between. The ratio of adhesive layer 220b thickness $t_{3b}$ to the first polymeric layer 240b thickness $t_{4b}$ may be about 0.5:1.

According such embodiments, the adhesive layer 220b is formed from a pressure sensitive adhesive composition. The pressure sensitive composition is optically clear The pressure sensitive adhesive composition may comprise one or more acrylic polymers, vinyl polymers, mixtures, or copolymers thereof. Non-limiting examples of acrylic polymer may include homopolymers or co-polymers of one or more acrylate monomer such as C1 to C10 esters of acrylic acid. Non-limiting examples acrylate monomer may include such as butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl (meth)acrylate, isooctyl (meth)acrylate, isononyl (meth)acrylate and 2-ethylbutyl (meth)acrylate. In some embodiments, acrylic polymer may be a copolymer of an acrylate monomer and other monomers, such as ethylene.

In some embodiments, the pressure sensitive adhesive composition is in the form of a film. The adhesive layer 220b may be substantially free of UV additives. In other embodiments, the adhesive layer 220b may be completely free of UV additives.

The adhesive layer 220b may be formed from a pressure sensitive adhesive composition and have a thickness $t_{3b}$ ranging from about 10 $\mu$m to about 40 $\mu$m - including all values and sub-ranges there-between. The adhesive layer 220b may be formed from a pressure sensitive adhesive composition and have a thickness $t_{3b}$ ranging from about 20 $\mu$m to about 30 $\mu$m - including all values and sub-ranges there-between. The adhesive layer 220b may be formed from a pressure sensitive adhesive composition and have a thickness $t_{3b}$ of about 25 $\mu$m.

The first polymeric layer 240b may have a thickness $t_{3b}$ ranging from about 35 $\mu$m to about 90 $\mu$m - including all values and sub-ranges there-between. The first polymeric layer 240b may have a thickness $t_{3b}$ of from about 20 $\mu$m to about 75 $\mu$m - including all values and sub-ranges there-between. The first polymeric layer 240b may have a thickness $t_{3b}$ of from about 25 $\mu$m to about 65 $\mu$m - including all values and sub-ranges there-between. The first polymeric layer 240b may have a thickness $t_{3b}$ of from about 35 $\mu$m to about 60 $\mu$m - including all values and sub-ranges there-between. The first polymeric layer 240b may have a thickness $t_{3b}$ of from about 45 $\mu$m to about 55 $\mu$m - including all values and sub-ranges there-between. The first polymeric layer 240b may have a thickness $t_{3b}$ of about 50 $\mu$m. The first polymeric layer 240b may have a thickness $t_{3b}$ of about 51 $\mu$m. The first polymeric layer 240b may have a thickness $t_{3b}$ of about 50.8 $\mu$m.

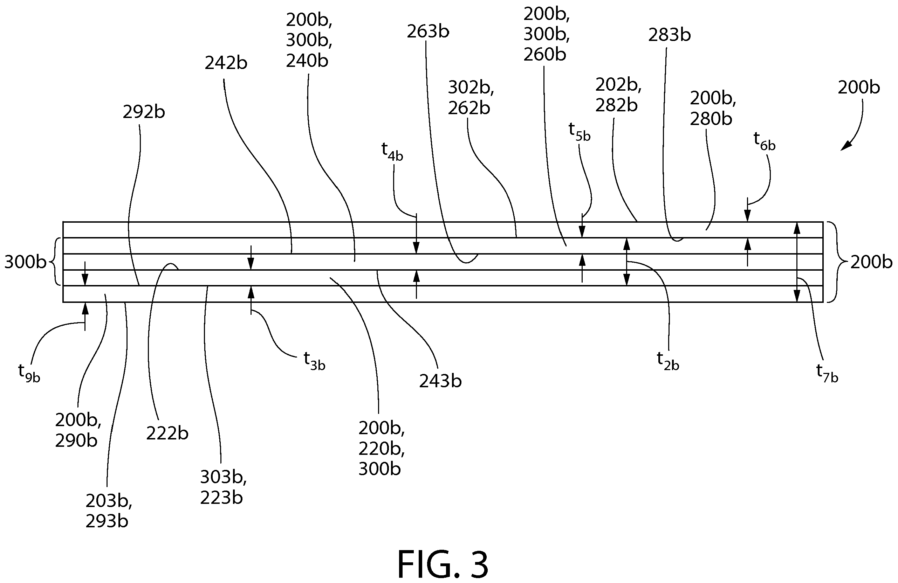

The adhesive layer 220b may comprise from about 20 wt.% to about 40 wt.% of the anti-fog complex 300b - including all values and sub-ranges there-between. The adhesive layer 220b may comprise from about 25 wt.% to about 35 wt.% of the anti-fog complex 300b - including all values and sub-ranges there-between. The adhesive layer 220b may comprise about 29 wt.% of the anti-fog complex 300b. According to the embodiments of Figure 3, the adhesive layer 220b may comprises 30 wt.% of the anti-fog complex 300b.

The first polymeric layer 240b may comprise from about 50 wt.% to about 70 wt.% of the anti-fog complex 300b - including all values and sub-ranges there-between. The first polymeric layer 240b may comprise from about 55 wt.% to about 65 wt.% of the anti-fog complex 300b - including all values and sub-ranges there-between. The first polymeric layer 240b may comprise about 57 wt.% to about 59 wt. % of the anti-fog complex 300b. The first polymeric layer 240b may comprise about 58 wt.% of the anti-fog complex 300b.

The second polymeric layer 260b may comprise from about 8 wt.% to about 16 wt.% of the anti-fog complex 300b - including all values and sub-ranges there-between. The second polymeric 260b layer may comprise from about 10 wt.% to about 14 wt.% of the anti-fog complex 300b - including all values and sub-ranges there-between. The second polymeric layer 260b may comprise about 12 wt.% to about 13 wt. % of the anti-fog complex 300b.

Referring now to Figure 3, the present invention may be a multi-layer film 200b having an upper surface 202b opposite a lower surface 203b. The multi-layer film 200b may comprise a top protective layer 280b, the anti-fog complex 300b, and, optionally, a bottom protective layer 290b, wherein the anti-fog complex 300b includes the adhesive layer 220b formed from the pressure sensitive adhesive composition, as previously discussed. Specifically, the multi-layer film 200b comprises a top protective layer 280b positioned atop the second polymeric layer 260b, the second polymeric layer 260b being positioned atop the first polymeric layer 240b, the first polymeric layer 240b being positioned atop the bottom protective layer 290b.

The top protective layer 280b may comprise an upper surface 282b opposite a lower surface 283b. The top protective layer 280b may have a thickness $t_{6b}$ as measured from the upper surface 282b to the lower surface 283b of the top protective layer 280b. The thickness $t_{6b}$ of the top protective layer 280b may range from about 10 $\mu$m to about 38 $\mu$m - including all values and sub-ranges there-between. The top protective layer 280b may comprise a polymer such as polyethylene terephthalate. The upper surface 202b of the multi-layer film 200b may comprise the upper surface 282b of the top protective layer 280b.

The bottom protective layer 290b may comprise an upper surface 292b opposite a lower surface 293b. The bottom protective layer 290b may have a thickness $t_{9b}$ as measured from the upper surface 292b to the lower surface 293b of the bottom protective layer 290. The thickness $t_{9b}$ of the bottom protective layer 290b may range from about 10 $\mu$m to about 38 $\mu$m - including all values and sub-ranges there-between. The bottom protective layer 290b may comprise a polymer such as polyethylene terephthalate. The lower surface 203b of the multi-layer film 200b may comprise the lower surface 293b of the bottom protective layer 290b.

The anti-fog complex 300b may comprise about 60 to about 70 wt. % of the multi-layer film 200b. The top protective layer 280b and the bottom protective layer 290b may each comprise about 15 wt. % to about 20 wt. % of the multi-layer film 200b.

The multi-layer film 200b may have a thickness $t_{7b}$ that is calculated as follows:

$$t_{7b} = t_{3b} + t_{4b} + t_{5b} + t_{6b} + t_{9b}$$

The multi-layer film 200b may have the following layer organization: the lower surface 283 of the top protective layer 280 may contact the upper surface 262 of the second polymeric layer 260, the lower surface 263 of the second polymeric layer 260 may contact the upper surface 242 of the first polymeric layer 240, the lower surface 243 of the first polymeric layer 240 may contact the upper surface 222 of the adhesive layer 220, and the lower surface 223 of the adhesive layer 220 may contact the upper surface 292 of the bottom protective layer 290.

During application, the bottom protective layer 290 may be removed, thereby exposing the lower surface 303 of the anti-fog complex 300, which is then brought in contact with the upper surface 102 of a reflective substrate 100. Specifically, removing the bottom protective layer 290 exposes the lower surface 223 of the adhesive layer 200, which may then be contacted with the upper surface 102 of the reflective substrate 100 such that the lower surface 303 of the anti-fog complex 300 is adhesively bonded (by the adhesive layer 220) to the upper surface 102 of the reflective substrate 100. Before or during application of the lower surface 303 of the anti-fog complex 300 onto the upper surface 102 of the reflective substrate 100, the adhesive layer 220 may be heated (e.g., by heated roller) to a temperature ranging from about 48 °C to about 60 °C to help facilitate the application of the pressure sensitive adhesive composition of the adhesive layer 220 onto the reflective substrate 100. Specifically, by using the addition of heat from the heated roller at a temperature ranging from about 48 °C to about 60 °C, the resulting anti-fog complex 300b (which uses the pressure sensitive based adhesive layer 220) results in superior optical properties that include the anti-fog complex 300b being substantially clear (i.e. "optically clear"), thereby providing a superior mirror 80.

After application, downward pressure may be applied to the upper surface 283 of the top protective layer 280. The top protective layer 280 may then be removed, thereby exposing the top surface 302 of the anti-fog complex 300 and the top surface 262b of the second polymeric layer 260 to the surrounding environment. The exposed upper surface 302b of the anti-fog complex 300 may then be cleaned by a post-lamination cleaning cycle, described further herein..

Other embodiments provide a method of manufacturing a mirror including an adhesive layer formed from the thermally-activated adhesive composition comprising: a) providing a reflective substrate and a multi-layer film, the multi-layer film comprising a top protective layer atop an anti-fog complex, the anti-fog complex comprising: a first polymeric layer; an adhesive layer; a second polymeric layer; b) laminating the multi-layer film and the reflective substrate together to form a laminated composite; c) maintaining the laminated composite in ambient conditions for a time sufficient to permit solidification of the multi-layer film; d) removing the top protective layer from the laminated composite to expose the anti-fog complex; and e) performing a post-lamination cleaning cycle.

Referring now generally to the present invention, the post-lamination cleaning phase comprises a first cleaning step and a second cleaning step. In some embodiments, the second cleaning step is performed within 24 hours after completion of the first cleaning step. In some embodiments, the second cleaning step is performed at least 24 hours after the first cleaning step is completed.

In some embodiments, the second cleaning step is performed 30 minutes after completion of the first cleaning step. In some embodiments, the second cleaning step is performed one hour after completion of the first cleaning step. In some embodiments, the second cleaning step is performed two hours after completion of the first cleaning step. In some embodiments, the second cleaning step is performed four hours after completion of the first cleaning step. In some embodiments, the second cleaning step is performed 8 hours after completion of the first cleaning step. In some embodiments, the second cleaning step is performed twelve hours after completion of the first cleaning step. In some embodiments, the second cleaning step is performed eighteen hours after completion of the first cleaning step.

In some embodiments, the second cleaning step is performed from about 30 minutes to 24 hours after completion of the first cleaning step. In some embodiments, the second cleaning step is performed from about 1 hour to 18 hours after completion of the first cleaning step. In some embodiments, the second cleaning step is performed from about 2 hours to 12 hours after completion of the first cleaning step. In some embodiments, the second cleaning step is performed from about 4 hours to 10 hours after completion of the first cleaning step. In some embodiments, the second cleaning step is performed from about 6 hours to 8 hours after completion of the first cleaning step.

In some embodiments, exposure of the reflective surface covering to an environment having a relative humidity of greater than about 60% causes leaching or blooming of certain elements to the surface of the reflective surface covering, resulting in a white haze on that surface. Conventional methods of preparing reflective surface coverings have, heretofore, not been able to eliminate formation of this white haze.

In some embodiments, the anti-fog complex may be referred to as an anti-fog matrix. In those embodiments wherein the anti-fog complex is referred to as an anti-fog matrix, it is believed that one or more components of the anti-fog matrix releases one or more elements which present on the top surface of the reflective surface covering, under certain environmental conditions. In some embodiments, it is believed that these elements reach the top surface by permeating through the first polymeric layer. In other embodiments, it is believed that the presentation of these elements on the top surface is the result of a chemical reaction between an element of the second polymeric layer and an environmental constituent, which causes the element to emanate from the first polymeric layer.

In some embodiments, the first cleaning step comprises applying an alcohol based composition to the anti-fog complex. In some embodiments, the alcohol based composition is manually applied to the anti-fog complex. In some embodiments, the alcohol based composition is applied to the anti-fog complex using a roller. In some embodiments, the alcohol based composition is applied to the anti-fog complex using a paint roller.

In some embodiments, the first cleaning step further comprises removing the alcohol based composition from the anti-fog complex. In some embodiments, the first cleaning step further comprises removing the alcohol based composition from the anti-fog complex using a towel. In some embodiments, the towel comprises a natural fiber. In some embodiments, the towel is a cloth towel.

In some embodiments, the first cleaning step further comprises applying an alkaline solution to the anti-fog complex. In some embodiments, the alkaline solution is an ammonia based solution. In some embodiments, the alkaline solution is manually applied to the anti-fog complex. In some embodiments, the first cleaning step further comprises removing the alkaline solution from the anti-fog complex. In some embodiments, the alkaline solution is removed from the anti-fog complex using a cellulosic substrate. In some embodiments, the cellulosic substrate is a paper towel.

In some embodiments, the second cleaning step comprises applying an alcohol based composition to the anti-fog complex. In some embodiments, the second cleaning step further comprises removing the alcohol based composition from the anti-fog complex. In some embodiments, the second cleaning step further comprises removing the alcohol based composition from the anti-fog complex using a towel. In some embodiments, the towel comprises a natural fiber. In some embodiments, the towel is a cloth towel.

In some embodiments, the second cleaning step further comprises applying an alkaline solution to the anti-fog complex. In some embodiments, the alkaline solution is an ammonia based solution. In some embodiments, the alkaline solution is manually applied to the anti-fog complex. In some embodiments, the second cleaning step further comprises removing the alkaline solution from the anti-fog complex. In some embodiments, the alkaline solution is removed from the anti-fog complex using a cellulosic substrate. In some embodiments, the cellulosic substrate is a paper towel.

In some embodiments, the first cleaning step and/or the second cleaning step are automated.

In some embodiments, the step of laminating the multi-layer film and the reflective substrate together to form a laminated composite is performed in a cleanroom. As used herein, the term "clean room" is intended to refer to an environment having an ISO 14644-1 cleanroom standard of between ISO 1 and ISO 8.

In some embodiments, the laminated composite is maintained in an ambient environment for from about 48 to about 72 hours. In some embodiments, the laminated composite is maintained in an ambient environment for about 48 hours. In some embodiments, the laminated composite is maintained in an ambient environment for about 72 hours. In some embodiments, the laminated composite is maintained in an ambient environment for at least 84 hours. In some embodiments, the laminated composite is maintained in an ambient environment for at least 96 hours.

In some embodiments, the reflective substrate and the multi-layer film are laminated together using a hot roll laminator. In some embodiments, the reflective substrate and the multi-layer film are laminated together in a cleanroom. In some embodiments, the hot roll laminator has a run speed of between about 1 foot/minute and about 10 feet/minute. In some embodiments, the hot roll laminator has a run speed of between about 2 feet/minute and about 9 feet/minute. In some embodiments, the hot roll laminator has a run speed of between about 3 feet/minute and about 8 feet/minute. In some embodiments, the hot roll laminator has a run speed of between about 4 feet/minute and about 7 feet/minute. In some embodiments, the hot roll laminator has a run speed of between about 4 feet/minute and about 6 feet/minute. In other embodiments, the hot roll laminator has a run speed of about 3 feet/minute. In other embodiments, the hot roll laminator has a run speed of about 4 feet/minute. In other embodiments, the hot roll laminator has a run speed of about 5 feet/minute.

In some embodiments, the reflective substrate is inspected for defects prior to laminating the multi-layer film and the reflective substrate together.

In some embodiments, the multi-layer film and the reflective substrate are laminated together at a pressure of from about 10 pounds per square inch (psi) to about 40 psi. In some embodiments, the multi-layer film and the reflective substrate are laminated together at a pressure of from about 15 psi to about 35 psi. In some embodiments, the multi-layer film and the reflective substrate are laminated together at a pressure of from about 20 psi to about 30 psi. In some embodiments, the multi-layer film and the reflective substrate are laminated together at a pressure of about 25 psi.

In some embodiments, the multi-layer film is maintained at a tension of from about 15 pounds to about 30 pounds during the laminating step. In other embodiments, the multi-layer film is maintained at a tension of from about 20 pounds to about 25 pounds during the laminating step.

In some embodiments, the hot roll laminator is maintained at a temperature of from about 105 °C to about 130 °C during the laminating step. In some embodiments, the hot roll laminator is maintained at a temperature of from about 110 °C to about 125 °C during the laminating step. In some embodiments, the hot roll laminator is maintained at a temperature of from about 115 °C to about 120 °C during the laminating step.

Referring now generally to the present invention, the mirror 80 has a scratch/dig ratio between 120/80 and 10/5. In some embodiments, the mirror 80 has a scratch/dig ratio between 80/50 and 20/10. In some embodiments, the mirror 80 has a scratch/dig ratio between 60/40 and 40/20. The mirror 80 may have a Yellow Index Rating of greater than 3. In other embodiments, the mirror 80 of the present invention has a Yellow Index Rating of greater than or equal to 4.

In some embodiments, the reflective surface has a visible light reflectance of greater than 75%. In some embodiments, the reflective surface has a visible light reflectance of greater than 80%. In some embodiments, the reflective surface has a visible light reflectance of greater than 85%. In some embodiments, the reflective surface has a visible light reflectance of greater than 90%. In some embodiments, the reflective surface has a visible light reflectance of greater than 95%. In some embodiments, the reflective surface has a visible light reflectance of greater than 97.5%. In some embodiments, the reflective surface has a visible light reflectance of greater than 98%. In some embodiments, the reflective surface has a visible light reflectance of greater than 99%.

In some embodiments, each layer of the multi-layer film has a particular arrangement. In some embodiments, the first polymeric layer is positioned between the adhesive layer and the second polymeric layer. In those embodiments wherein the multi-layer film further comprises a protective layer, the protective layer is adjacent to the second polymeric layer. In some embodiments wherein the multi-layer film further comprises a protective layer, there are no intervening layers between the protective layer and the second polymeric layer.

In some embodiments, the second polymeric layer forms the top surface of the multi-layer film. In those embodiments wherein the multi-layer film comprises a protective layer, the protective layer forms the top surface of the multi-layer film.

In some embodiments, the first polymeric layer is positioned between the adhesive layer and the second polymeric layer, such that there are no intervening layers between the first polymeric layer and the adhesive layer. In some embodiments, the first polymeric layer is positioned between the adhesive layer and the second polymeric layer, such that there are no intervening layers between the first polymeric layer and the second polymeric layer. In some embodiments, the first polymeric layer is positioned between the adhesive layer and the second polymeric layer, such that there are no intervening layers between the first polymeric layer and the second polymeric layer or any intervening layers between the first polymeric layer and the adhesive layer.

In some embodiments, each layer of the anti-fog complex has a particular arrangement. In some embodiments, the first polymeric layer is positioned between the adhesive layer and the second polymeric layer of the anti-fog complex. In some embodiments, the second polymeric layer forms the top surface of the anti-fog complex. In some embodiments, the anti-fog complex does not contain any intervening layers between the first polymeric layer and the adhesive layer. In some embodiments, the anti-fog complex does not contain any intervening layers between the first polymeric layer and the second polymeric layer. In some embodiments, the anti-fog complex does not contain any intervening layers between the first polymeric layer and the second polymeric layer or any intervening layers between the first polymeric layer and the adhesive layer.

The invention will be described in greater detail by way of specific examples. The following examples are offered for illustrative purposes and are not intended to limit the invention in any manner. Those skilled in the art will readily recognize a variety of noncritical parameters, which can be changed or modified to yield essentially the same results.

EXAMPLES

*Example 1*

Table 1 (below) describes the results of evaluations performed on exemplary reflective surface coverings of the present invention and comparative surface coverings. All surface coverings are evaluated for discoloration, quality of lamination and functionality; and an aggregate pass/fail rating is assigned. A surface covering which does not meet the standard for discoloration, quality of lamination or functionality receives a "Fail" rating.

Discoloration (e.g. yellowing of the product) and quality of lamination are assessed by visual inspection; and functionality is assessed by visible light reflectance.

Table 1

| Example | Thickness ($\mu$m) | | Adhesive | Pass/Fail |
|---|---|---|---|---|
| | Adhesive | PET | | |
| Ex. I | 152.4 | 101.6 | A* | Pass |
| Ex. II | 152.4 | 101.6 | A | Pass |
| Comp. Ex. I | 152.4 | 50.8 | A | Fail |
| Comp. Ex. II | 152.4 | 50.8 | B** | Fail |
| Comp. Ex. III | 152.4 | 101.6 | B | Fail |
| Comp. Ex. IV | 177.8 | 50.8 | A | Fail |

(continued)

| Example | Thickness (µm) | | Adhesive | Pass/Fail |
|---|---|---|---|---|
| | Adhesive | PET | | |
| Comp. Ex. V | 177.8 | 101.6 | B | Fail |
| Comp. Ex. VI | 152.4 | 50.8 | A | Fail |
| Comp. Ex. VII | 152.4 | 50.8 | A | Fail |
| Comp. Ex. VIII | 152.4 | 101.6 | C*** | Fail |
| Comp. Ex. IX | 88.9 | 101.6 | B | Fail |
| Comp. Ex. X | 63.5 | 101.6 | B | Fail |
| Comp. Ex. XI | 114.3 | 101.6 | B | Fail |
| Comp. Ex. XII | 38.1 | 101.6 | B | Fail |
| * Thermally activated adhesive<br>** Hot melt adhesive<br>***Adhesive + UV additive | | | | |

The results described in Table 1 (above) demonstrate that exemplary reflective surface coverings of the present invention meet the quality standards for discoloration, quality of lamination and functionality, while the comparative reflective surface coverings fail to meet at least one of these quality standards.

### Example 2

Reflective surface coverings prepared according to exemplary methods of the present invention and reflective surface coverings prepared in accordance with comparative methods are evaluated. The exemplary methods of the present invention included first and second cleaning steps, while the comparative methods did not. The surface coverings are visually inspected for the presence of white haze on the top surface. Remarkably, reflective surface coverings prepared by comparative methods possess a white haze on the top surface; whereas reflective surface coverings prepared in accordance with exemplary methods of the present invention are free of white haze.

It is intended that any patents, patent applications or printed publications, including books, mentioned in this patent document be hereby incorporated by reference in their entirety.

As those skilled in the art will appreciate, numerous changes and modifications may be made to the embodiments described herein, without departing from the scope of the protection which is defined by the appended claims.

### Claims

1.   A mirror apparatus (1) comprising:

   a reflective substrate (100a); and
   an anti-fog complex (300a) coupled to the reflective substrate (100a), the anti-fog complex (300a) comprising:

      a thermally activated adhesive layer (220a) atop the reflective substrate (100a);
      a first polymeric layer (240a) comprising a thermoplastic polymer, the first polymeric layer (240a) being atop the thermally activated adhesive layer (220a); and
      a second polymeric layer (260a) atop the first polymeric layer (240a);

   **characterised in that** the thickness ratio between the thermally activated adhesive layer (220a) and the first polymeric layer (240a) is from 1.25:1 ± 5% to 2.75:1 ±5%

2.   The mirror apparatus (1) according to claim 1, further comprising one or more of the following features:-

   a) wherein the mirror apparatus (1) has a scratch/dig ratio between 120/80 and 10/5;
   b) wherein the anti-fog complex (300a) has a thickness of from 250 ± 5% µm to 300 ± 5% µm;

c) wherein the thermally activated adhesive layer is substantially free of a UV additive;
d) wherein the anti-fog complex (300a) is substantially free of a UV additive;
e) wherein the first polymeric layer has a thickness of from 75 $\pm$ 5% $\mu$m to 125 $\pm$ 5% $\mu$m;
f) a protective layer atop the second polymeric layer;
g) wherein the second polymeric layer comprises a polyurethane;
h) wherein the mirror apparatus (1) has a Yellow Index Rating of greater than 3;
i) wherein the mirror apparatus (1) has a Yellow Index Rating of greater than or equal to 4;
j) wherein the anti-fog complex (300a) is optically clear; and
k) wherein the mirror apparatus (1) has a visible light reflectance of greater than 85%.

3. The mirror apparatus (1) according to claim 2, wherein the second polymeric layer further comprises a hydrophilic polymer.

4. A method of preparing a mirror apparatus (1) comprising:

a) providing a reflective substrate (100b)
b) providing a multi-layer film (200b) comprising:
an anti-fog complex (300b) comprising:

a first polymeric layer (240b);
an adhesive layer (220b); and
a second polymeric layer (260b);

c) laminating the multi-layer film (200b) and the reflective substrate (100b) together to form a laminated composite;
d) maintaining the laminated composite in an ambient environment for a time sufficient to permit solidification of the multi-layer film (200b);

**characterised in that** said multi-layer film (200b) further comprises a protective layer (280b) and further **characterised by** the steps of:

e) removing the protective layer (280b) from the laminated composite to expose the anti-fog complex (300b); and
f) performing a post-lamination cleaning phase wherein the thickness ratio between the adhesive layer and the first polymeric layer is from 1.25:1 $\pm$ 5% to 2.75:1 $\pm$ 5%.

5. The method according to claim 4, further comprising one or more of the following features:-

a) wherein the post-lamination cleaning phase comprises a first cleaning step and a second cleaning step;
b) wherein the laminated composite is maintained in an ambient environment for from 48 $\pm$ 5% to 72 $\pm$ 5% hours;
c) wherein the reflective substrate and the multi-layer film are laminated together using a hot roll laminator;
d) wherein the reflective substrate and the multi-layer film are laminated together to form a laminated composite in a cleanroom;
e) wherein the reflective substrate (100b) is inspected for defects prior to laminating the multi-layer film (200b) and the reflective substrate (100b) together to form a laminated composite;
f) wherein the multi-layer film (200b) and the reflective substrate (100b) are laminated together to form a laminated composite at a pressure of from 69 $\pm$ 5% kPa to 276 $\pm$ 5% kPa;
g) wherein the multi-layer film (200b) and the reflective substrate (100b) are laminated together to form a laminated composite at a pressure of from 138 $\pm$ 5% kPa to 207 $\pm$ 5% kPa;
h) wherein the multi-layer film (200b) and the reflective substrate (100b) are laminated together to form a laminated composite at a pressure of 172 $\pm$ 5% kPa;
i) wherein the multi-layer film (100b) is maintained at a tension of from 6.8 $\pm$ 5% kg to 13.6 $\pm$ 5% kg during the laminating step; and
j) wherein the multi-layer film (100b) is maintained at a tension of from 9 $\pm$ 5% kg to 11.3 $\pm$ 5% kg during the laminating step.

6. The method according to claim 5, further comprising one or more of the following features:-

a) wherein the second cleaning step is performed at least 24 hours after completion of the first cleaning step;

b) wherein the second cleaning step is performed from 30 ± 5% minutes to 24 ± 5% hours after completion of the first cleaning step;

c) wherein the first cleaning step comprises applying an alcohol based composition to the anti-fog complex (300b);

d) wherein the first cleaning step further comprises removing the alcohol based composition from the anti-fog complex (300b);

e) wherein the second cleaning step comprises applying an alcohol based composition to the anti-fog complex (300b);

f) wherein the first cleaning step further comprises applying an alkaline solution to the anti-fog complex (300b); and.

g) wherein the first cleaning step further comprises removing the alkaline solution from the anti-fog complex (300b).

7. The method according to claim 6, wherein the second cleaning step further comprises removing the alcohol based composition from the anti-fog complex (300b).

8. The method according to claim 6 or claim 7, wherein the second cleaning step further comprises applying an alkaline solution to the anti-fog complex (300b).

9. The method according to claim 9, wherein the second cleaning step further comprises removing the alkaline solution from the anti-fog complex (300b).

10. The method according to claim 5, further comprising one or more of the following features:-

a) wherein the hot roll laminator has a run speed of from 30.5 cm/minute to 305 cm/minute;

b) wherein the hot roll laminator has a run speed of 91 cm/minute;

c) wherein the hot roll laminator has a run speed of 152 cm/minute;

d) wherein the hot roll laminator is maintained at a temperature of from 105 °C to 130 °C during the laminating step; and

e) wherein the hot roll laminator is maintained at a temperature of from 110 °C to 125 °C during the laminating step.


**Patentansprüche**

1. Spiegelvorrichtung (1), umfassend:

ein reflektierendes Substrat (100a) und

einen Antibeschlag-Komplex (300a), der mit dem reflektierenden Substrat (100a) verbunden ist, wobei der Antibeschlag-Komplex (300a) umfasst:

eine thermisch aktivierte Klebstoffschicht (220a) auf dem reflektierenden Substrat (100a);

eine erste Polymerschicht (240a), die ein thermoplastisches Polymer umfasst, wobei die erste Polymerschicht (240a) auf der thermisch aktivierten Klebstoffschicht (220a) ist; und

eine zweite Polymerschicht (260a) auf der ersten Polymerschicht (240a);

**dadurch gekennzeichnet, dass** das Dickenverhältnis zwischen der thermisch aktivierten Klebstoffschicht (220a) und der ersten Polymerschicht (240a) von 1,25:1 ± 5 % bis 2,75:1 ± 5 % beträgt.

2. Spiegelvorrichtung (1) nach Anspruch 1, weiterhin umfassend eines oder mehrere der folgenden Merkmale:

a) wobei die Spiegelvorrichtung (1) ein Scratch-Dig-Verhältnis zwischen 120:80 und 10:5 aufweist;

b) wobei der Antibeschlag-Komplex (300a) eine Dicke von 250 ± 5 % μm bis 300 ± 5 % μm aufweist;

c) wobei die thermisch aktivierte Klebstoffschicht im Wesentlichen frei von einem UV-Additiv ist;

d) wobei der Antibeschlag-Komplex (330a) im Wesentlichen frei von einem UV-Additiv ist;

e) wobei die erste Polymerschicht eine Dicke von 75 ± 5 % μm bis 125 ± 5 % μm aufweist;

f) eine Schutzschicht auf der zweiten Polymerschicht;

g) wobei die zweite Polymerschicht ein Polyurethan umfasst;

h) wobei die Spiegelvorrichtung (1) einen Gelb-Index-Wert von mehr als 3 aufweist;

i) wobei die Spiegelvorrichtung (1) einen Gelb-Index-Wert von mehr als oder gleich 4 aufweist;

j) wobei der Antibeschlag-Komplex (300a) optisch klar ist und

k) wobei die Spiegelvorrichtung (1) eine Reflexion von sichtbarem Licht von mehr als 85 % aufweist.

3. Spiegelvorrichtung nach Anspruch 2, wobei die zweite Polymerschicht weiterhin ein hydrophiles Polymer umfasst.

4. Verfahren zur Herstellung einer Spiegelvorrichtung (1), umfassend:

a) Bereitstellen eines reflektierenden Substrats (100b);
b) Bereitstellen einer mehrschichtigen Folie (200b), umfassend:
einen Antibeschlag-Komplex (300b), umfassend:

eine erste Polymerschicht (240b);
eine Klebstoffschicht (220b) und
eine zweite Polymerschicht (260b);

c) Laminieren der mehrschichtigen Folie (200b) und des reflektierenden Substrats (100b) miteinander, um eine laminierte Verbundstruktur zu bilden;
d) Halten der laminierten Verbundstruktur in einer Umgebung für eine Zeit, die dazu ausreicht, eine Verfestigung der mehrschichtigen Folie (200b) zu ermöglichen;

**dadurch gekennzeichnet, dass** die mehrschichtige Folie (200b) weiterhin eine Schutzschicht (280b) umfasst, und weiterhin **gekennzeichnet durch** die Schritte:

e) Entfernen der Schutzschicht (280b) von der laminierten Verbundstruktur, um den Antibeschlag-Komplex (300b) freizulegen; und
f) Durchführen einer Reinigungsphase nach der Lamination,

wobei das Dickenverhältnis zwischen der Klebstoffschicht und der ersten Polymerschicht von 1,25:1 $\pm$ 5 % bis 2,75:1 $\pm$ 5 % beträgt.

5. Verfahren nach Anspruch 4, weiterhin umfassend eines oder mehrere der folgenden Merkmale:

a) wobei die Reinigungsphase nach der Lamination einen ersten Reinigungsschritt und einen zweiten Reinigungsschritt umfasst;
b) wobei die laminierte Verbundstruktur in einer Umgebung für von 48 $\pm$ 5 % $\mu$m bis 72 $\pm$ 5 % Stunden gehalten wird;
c) wobei das reflektierende Substrat und die mehrschichtige Folie unter Verwendung eines Heißwalzenlaminators miteinander laminiert werden;
d) wobei das reflektierende Substrat und die mehrschichtige Folie in einem Reinraum miteinander laminiert werden, um eine laminierte Verbundstruktur zu bilden;
e) wobei das reflektierende Substrat (100b) vor dem Laminieren der mehrschichtigen Folie (200b) und des reflektierenden Substrats (100b) miteinander, um eine laminierte Verbundstruktur zu bilden, auf Mängel untersucht wird;
f) wobei die mehrschichtige Folie (200b) und das reflektierende Substrat (100b) bei einem Druck von 69 $\pm$ 5 % kPa bis 276 $\pm$ 5 % kPa miteinander laminiert werden, um eine laminierte Verbundstruktur zu bilden;
g) wobei die mehrschichtige Folie (200b) und das reflektierende Substrat (100b) bei einem Druck von 138 $\pm$ 5 % kPa bis 207 $\pm$ 5 % kPa miteinander laminiert werden, um eine laminierte Verbundstruktur zu bilden;
h) wobei die mehrschichtige Folie (200b) und das reflektierende Substrat (100b) bei einem Druck von 172 $\pm$ 5 % kPa miteinander laminiert werden, um eine laminierte Verbundstruktur zu bilden;
i) wobei die mehrschichtige Folie (100b) während des Laminationsschritts bei einer Spannung von 6,8 $\pm$ 5 % kg bis 13,6 $\pm$ 5 % kg gehalten wird; und
j) wobei die mehrschichtige Folie (100b) während des Laminationsschritts bei einer Spannung von 9 $\pm$ 5 % kg bis 11,3 $\pm$ 5 % kg gehalten wird.

6. Verfahren nach Anspruch 5, weiterhin umfassend eines oder mehrere der folgenden Merkmale:

a) wobei der zweite Reinigungsschritt mindestens 24 Stunden nach Abschluss des ersten Reinigungsschritts durchgeführt wird;

b) wobei der zweite Reinigungsschritt von 30 $\pm$ 5 % Minuten bis 24 $\pm$ 5 % Stunden nach Abschluss des ersten Reinigungsschritts durchgeführt wird;

c) wobei der erste Reinigungsschritt ein Anwenden einer alkoholbasierten Zusammensetzung auf den Antibeschlag-Komplex (300b) umfasst;

d) wobei der erste Reinigungsschritt weiterhin ein Entfernen der alkoholbasierten Zusammensetzung von dem Antibeschlag-Komplex (300b) umfasst;

e) wobei der zweite Reinigungsschritt ein Anwenden einer alkoholbasierten Zusammensetzung auf den Antibeschlag-Komplex (300b) umfasst;

f) wobei der erste Reinigungsschritt weiterhin ein Anwenden einer alkalischen Lösung auf den Antibeschlag-Komplex (300b) umfasst; und

g) wobei der erste Reinigungsschritt weiterhin ein Entfernen der alkalischen Lösung von dem Antibeschlag-Komplex (300b) umfasst.

7. Verfahren nach Anspruch 6, wobei der zweite Reinigungsschritt weiterhin ein Entfernen der alkoholbasierten Zusammensetzung von dem Antibeschlag-Komplex (300b) umfasst.

8. Verfahren nach Anspruch 6 oder 7, wobei der zweite Reinigungsschritt weiterhin ein Anwenden einer alkalischen Lösung auf den Antibeschlag-Komplex (300b) umfasst.

9. Verfahren nach Anspruch 9, wobei der zweite Reinigungsschritt weiterhin ein Entfernen der alkalischen Lösung auf den Antibeschlag-Komplex (300b) umfasst.

10. Verfahren nach Anspruch 5, weiterhin umfassend eines oder mehrere der folgenden Merkmale:

a) wobei der Heißwalzenlaminator eine Laufgeschwindigkeit von 30,5 cm/Minute bis 305 cm/Minute aufweist;

b) wobei der Heißwalzenlaminator eine Laufgeschwindigkeit von 91 cm/Minute aufweist;

c) wobei der Heißwalzenlaminator eine Laufgeschwindigkeit von 152 cm/Minute aufweist;

d) wobei der Heißwalzenlaminator während des Laminationsschritts bei einer Temperatur von 105 °C bis 130 °C gehalten wird; und

e) wobei der Heißwalzenlaminator während des Laminationsschritts bei einer Temperatur von 110 °C bis 125 °C gehalten wird.

## Revendications

1. Appareil formant miroir (1) comportant :

   un substrat réfléchissant (100a) ; et
   un complexe antibuée (300a) accouplé au substrat réfléchissant (100a), le complexe antibuée (300a) comportant :

   une couche adhésive activée thermiquement (220a) par-dessus le substrat réfléchissant (100a) ;
   une première couche polymère (240a) comportant un polymère thermoplastique, la première couche polymère (240a) étant par-dessus la couche adhésive activée thermiquement (220a) ; et
   une deuxième couche polymère (260a) par-dessus la première couche polymère (240a) ;

   **caractérisé en ce que** le rapport d'épaisseur entre la couche adhésive activée thermiquement (220a) et la première couche polymère (240a) va de 1,25:1 $\pm$ 5 % à 2,75:1 $\pm$ 5%.

2. Appareil formant miroir (1) selon la revendication 1, comportant par ailleurs une ou plusieurs parmi les caractéristiques suivantes :

   a) dans lequel l'appareil formant miroir (1) a un rapport de rayures/piqûres entre 120/80 et 10/5 ;
   b) dans lequel le complexe antibuée (300a) a une épaisseur allant de 250 $\pm$ 5 % $\mu$m à 300 $\pm$ 5 % $\mu$m ;
   c) dans lequel la couche adhésive activée thermiquement est sensiblement exempte de tout additif UV ;
   d) dans lequel le complexe antibuée (300a) est sensiblement exempt de tout additif UV;
   e) dans lequel la première couche polymère a une épaisseur allant de 75 $\pm$ 5 % $\mu$m à 125 $\pm$ 5 % $\mu$m ;
   f) une couche de protection par-dessus la deuxième couche polymère ;

g) dans lequel la deuxième couche polymère comporte un polyuréthanne ;

h) dans lequel l'appareil formant miroir (1) a un indice de jaunissement supérieur à 3 ;

i) dans lequel l'appareil formant miroir (1) a un indice de jaunissement supérieur ou égal à 4 ;

j) dans lequel le complexe antibuée (300a) est optiquement transparent ; et

k) dans lequel l'appareil formant miroir (1) a une réflectance à la lumière visible de plus de 85 %.

3.  Appareil formant miroir (1) selon la revendication 2, dans lequel la deuxième couche polymère comporte par ailleurs un polymère hydrophile.

4.  Procédé de préparation d'un appareil formant miroir (1) comportant les étapes consistant à :

    a) mettre en œuvre un substrat réfléchissant (100b) ;
    b) mettre en œuvre un film multicouche (200b) comportant :
    un complexe antibuée (300b) comportant :

        une première couche polymère (240b) ;
        une couche adhésive (220b) ; et
        une deuxième couche polymère (260b) ;

    c) stratifier le film multicouche (200b) et le substrat réfléchissant (100b) ensemble pour former un composite stratifié ;
    d) maintenir le composite stratifié dans un environnement ambiant pendant une période de temps suffisante pour permettre la solidification du film multicouche (200b) ;

    **caractérisé en ce que** ledit film multicouche (200b) comporte par ailleurs une couche de protection (280b) et **caractérisé par** ailleurs par les étapes consistant à :

        e) retirer la couche de protection (280b) du composite stratifié pour exposer le complexe antibuée (300b) ; et
        f) effectuer une phase de nettoyage post-stratification,

    dans lequel le rapport d'épaisseur entre la couche adhésive et la première couche polymère va de 1,25:1 ± 5 % à 2,75:1 ± 5 %.

5.  Procédé selon la revendication 4, comportant par ailleurs une ou plusieurs parmi les caractéristiques suivantes :

    a) dans lequel la phase de nettoyage post-stratification comporte une première étape de nettoyage et une deuxième étape de nettoyage ;
    b) dans lequel le composite stratifié est maintenu dans un environnement ambiant pendant une période allant de 48 ± 5 % à 72 ± 5 % heures ;
    c) dans lequel le substrat réfléchissant et le film multicouche sont stratifiés ensemble au moyen d'un rouleau de pelliculage à chaud ;
    d) dans lequel le substrat réfléchissant et le film multicouche sont stratifiés ensemble pour former un composite stratifié dans une salle blanche ;
    e) dans lequel le substrat réfléchissant (100b) est inspecté à la recherche de défauts avant de stratifier le film multicouche (200b) et le substrat réfléchissant (100b) ensemble pour former un composite stratifié ;
    f) dans lequel le film multicouche (200b) et le substrat réfléchissant (100b) sont stratifiés ensemble pour former un composite stratifié à une pression allant de 69 ± 5 % kPa à 276 ± 5 % kPa ;
    g) dans lequel le film multicouche (200b) et le substrat réfléchissant (100b) sont stratifiés ensemble pour former un composite stratifié à une pression allant de 138 ± 5 % kPa à 207 ± 5 % kPa ;
    h) dans lequel le film multicouche (200b) et le substrat réfléchissant (100b) sont stratifiés ensemble pour former un composite stratifié à une pression de 172 ± 5 % kPa ;
    i) dans lequel le film multicouche (100b) est maintenu à une tension allant de 6,8 ± 5 % kg à 13,6 ± 5 % kg au cours de l'étape de stratification ; et
    j) dans lequel le film multicouche (100b) est maintenu à une tension allant de 9 ± 5 % kg à 11,3 ± 5 % kg au cours de l'étape de stratification.

6.  Procédé selon la revendication 5, comportant par ailleurs une ou plusieurs parmi les caractéristiques suivantes :

a) dans lequel la deuxième étape de nettoyage est effectuée au moins 24 heures après la réalisation de la première étape de nettoyage ;

b) dans lequel la deuxième étape de nettoyage est effectuée entre 30 $\pm$ 5 % minutes à 24 $\pm$ 5 % heures après la réalisation de la première étape de nettoyage ;

c) dans lequel la première étape de nettoyage comporte l'étape consistant à appliquer une composition à base d'alcool sur le complexe antibuée (300b) ;

d) dans lequel la première étape de nettoyage comporte par ailleurs l'étape consistant à retirer la composition à base d'alcool en provenance du complexe antibuée (300b) ;

e) dans lequel la deuxième étape de nettoyage comporte l'étape consistant à appliquer une composition à base d'alcool sur le complexe antibuée (300b) ;

f) dans lequel la première étape de nettoyage comporte par ailleurs l'étape consistant à appliquer une solution alcaline sur le complexe antibuée (300b) ; et

g) dans lequel la première étape de nettoyage comporte par ailleurs l'étape consistant à retirer la solution alcaline en provenance du complexe antibuée (300b).

7. Procédé selon la revendication 6, dans lequel la deuxième étape de nettoyage comporte par ailleurs l'étape consistant à retirer la composition à base d'alcool en provenance du complexe antibuée (300b).

8. Procédé selon la revendication 6 ou la revendication 7, dans lequel la deuxième étape de nettoyage comporte par ailleurs l'étape consistant à appliquer une solution alcaline sur le complexe antibuée (300b).

9. Procédé selon la revendication 9, dans lequel la deuxième étape de nettoyage comporte par ailleurs l'étape consistant à retirer la solution alcaline en provenance du complexe antibuée (300b).

10. Procédé selon la revendication 5, comportant par ailleurs une ou plusieurs parmi les caractéristiques suivantes :

a) dans lequel le rouleau de pelliculage à chaud a une vitesse de fonctionnement allant de 30,5 cm/minute à 305 cm/minute ;

b) dans lequel le rouleau de pelliculage à chaud a une vitesse de fonctionnement de 91 cm/minute ;

c) dans lequel le rouleau de pelliculage à chaud a une vitesse de fonctionnement de 152 cm/minute ;

d) dans lequel le rouleau de pelliculage à chaud est maintenu à une température allant de 105 °C à 130 °C au cours de l'étape de stratification ; et

e) dans lequel le rouleau de pelliculage à chaud est maintenu à une température allant de 110 °C à 125 °C au cours de l'étape de stratification.

FIG. 1

FIG. 1A

FIG. 2

FIG. 3

EP 3 213 129 B1

FIG. 4

EP 3 213 129 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14530420 PCT
- US 2008187728 A
- US 6455142 B
- US 5402265 A
- US 5877254 A
- US 6753379 B